Europäisches Patentamt

European Patent Office

Office européen des brevets

(11) Publication number: **0 315 243**

**A1**

# EUROPEAN PATENT APPLICATION

(21) Application number: 88202337.7

(22) Date of filing: **19.10.88**

(51) Int. Cl.⁴: **C04B 28/02 , E21B 33/13 , C04B 24/36 , C04B 24/42**

(30) Priority: **03.11.87 FR 8715334**
**21.04.88 FR 8805431**

(43) Date of publication of application:
**10.05.89 Bulletin 89/19**

(84) Designated Contracting States:
**DE GB IT NL**

(71) Applicant: **PUMPTECH N.V.**
**Atlantic House Noorderlaan 147 Bus 5C**
**B-2030 Antwerpen(BE)**

(72) Inventor: **Baret, Jean-François**
**7, Rue des Armuriers**
**F-42000 Saint-Etienne(FR)**
Inventor: **Boussouira, Belkacem**
**8, Rue Praire**
**F-42000 Saint-Etienne(FR)**

(74) Representative: **Richebourg, Michel**
**Dowell Schlumberger Z.I. Molina Chazotte**
**F-42000 Saint-Etienne(FR)**

(54) **Oil-well cement slurries with good fluid-loss control.**

(57) The invention covers cement slurries for the cementing of oil wells or similar, with good fluid-loss control, characterized by the fact that their mix fluid is an oil-in-water emulsion stabilized by at least one surface-active agent.

EP 0 315 243 A1

## Cement slurries with good fluid-loss control

This Invention covers cement slurries with good fluid-loss control. In particular, it covers cement slurries for the cementing of oil, gas, water, geothermal wells or similar.

Use of the slurries covered by the Invention is advantageous in the cementing of oil wells or similar and also in the cementing of geothermal, water or gas wells. This document is particularly concerned with the cementing of oil wells.

The Invention proposes new cement slurries with which the fluid loss towards permeable underground formations penetrated is minimized.

The first step in the cementing of an oil well is the preparation of a cement slurry - mixture of cement, water and various additives - followed by the injection under pressure of this mixture into the annulus around the tubing. The first aim of cementing is to prevent the movement of fluids between the various geological zones, then to fix and reinforce the tubing and finally to help protect it against corrosion. To obtain good cementing, it is necessary to control the flow of liquid from the injected cement slurry to porous formations.

Firstly, in the dynamic stage, corresponding to the injection of the cement, fluid loss causes a change in the density of the cement slurry and consequently an increase in its viscosity and a reduction in its thickening time. This may jeopardize the cementing operation.

Secondly, in the static stage, during the waiting period following cementing, excessive fluid loss is also detrimental as it results in the formation of a filtration "cake" which may obstruct the annulus and limit the transmission of hydrostatic pressure. The high pressure gas contained in certain formations may then migrate through the slurry and create "channels" between the various zones, or even up to the surface (known as gas migration). Furthermore, liquid filtering into formations may damage certain sensitive zones as a result of additives or fines it may contain.

The method used previously attempted to control fluid loss in cement slurries by the addition of various types of additives.

In particular, reference is made to the use of numerous water-soluble polymers as additives for fluid-loss control in the cementing of oil wells. Polymers such as: cellulose derivatives (hydroxyethycellulose, carboxymethyl hydroxyethylcellulose), synthetic co- and terpolymers based on amide monomers or acrylic acid monomers or sulfonated monomers, vinylpyrrolidone or quaternary ammonium salts. Although all these polymers behave differently in the cement slurries, they are all soluble polymers and thus all have the same disadvantage due to their nature; they act as matter adsorbed at the surface of cement particles and, therefore, modify the basic characteristics of the cement slurry: thickening time, "free water" and rheological parameters, and also, affect or are affected by the action of other additives interacting with the surface of the cement, such as retarders.

This is why, in spite of the polymer-based systems described in applications for French Patents 2 540 098 and 2 570 071, there is still a need for new systems capable of improving control of fluid loss with limited interaction with cement particles and therefore providing a wider range of uses.

These types of systems are proposed in the Invention.

The Invention represents an original solution to the problem of controlling fluid loss.

The cement slurries covered by the present Invention are characterized not by the use of a new fluid-loss control additive, but by the fact that their mix fluid is an oil-in-water emulsion stabilized by at least one surface-active agent.

The use of this emulsion gives the desired result.

The emulsion has an oil/water ratio of between 5 and 50 % by weight. It has been shown that the quantity of oil must be sufficient in order for the capillary action, created by the oil/water interface between the grains of cement, to significantly reduce the filtration of fluid through the cement cake. This is clearly an original approach.

The term "oil", as used above and throughout the text and claims in the current application, refers to any non-water-miscible liquid, in particular: paraffin, isoparaffin and aromatic hydrocarbons; naphtalene derivatives; asphalt; gas oil; petroleum and even silicone oils as well as mixtures of these compounds. Such products are well known to experts.

The surface-active agents are used in sufficient quantity to ensure the stability of the emulsion.

This emulsion generally contains surface-active agents at a rate of 1 to 20 % by weight in relation to the oil.

The surface-active agents may be chosen from any anionic, cationic or non-ionic emulsifiers with a hydrophilic/lipophilic balance (HLB) between 8 and 20, the value chosen will depend on the nature of the oil to be emulsified and the conditions of use. If the compound is to be used at a high temperatures, it is preferable to chose an HLB in the upper part of the above-given range.

The anionic or cationic surface-active agents may be used alone or in combination with non-ionic surface-active agents. Similarly, the water-in-oil emulsion used in the cement slurries, according to the Invention, can be stabilized by non-ionic surface-active agents used alone or in combination with ionic surface-active agents, either cationic or anionic.

As experienced professionals well know, surface-active agents are generally not used in the pure form, but rather as mixtures of products of the same type.

Thus, the anionic surface-active agents may be chosen from fatty acid salts with a chain length of around 8 to 14 carbon atoms; alkylsulfates with alkyl groups of 10 to 16 carbon atoms; the alkylbenzene sulfonates with alkyl groups with 8 to 14 carbon atoms; ethoxylated phenolic sulfates or mono- or diphosphates.

The cationic surface-active agents, as a result of the high pH of the interstitial water for the cement, will be of the quaternary ammonium type, such as alkyltrimethylammonium, alkyldimethylbensylammonium or dialkyldimethylammonium chlorides or bromides with alkyl chains of 4 to 20 carbon atoms.

The non-ionic surface-active agents may be chosen from ethoxylated alkylphenols and ethoxylated fatty alcohols. As the surface-active agents must have an HLB between 8 and 20, the alkylphenols or fatty alcohols must have approximately 6 to 20 carbon atoms in the hydrophobic part for 4 to 50 ethylene oxide groups.

Such surface-active agents are common and are familiar to experts.

In this Invention, the use of an oil-in-water emulsion as mix fluid in cement slurries allows reduction of fluid loss as is shown in the examples following.

Furthermore, the use of this emulsion in no way precludes the use of other additives.

Thus, the cement slurries mentioned in the Invention may also contain traditional additives such as anti-foam agents, thickening accelerators or retarders, lighteners, weight increasing additives, etc.

Furthermore, the cement slurries covered by the Invention have proven to be effective in severe conditions:
- temperatures, to 200° C (392° F);
- saline atmosphere, salt concentrations up to 37 % (saturation);
- density, with small or large volumes of water, with lighteners or weight increasing additives;
- and with high concentrations of thickening retarders.

Other characteristics and advantages of the Invention can be better appreciated by studying the following examples.

The laboratory tests were carried out with de-ionized water according to API 10 specifications.


## EXAMPLE 1

A cement slurry with a density of 1.89 g/cm$^3$ (15.8 pounds per gallon = ppg) was prepared according to API (American Petroleum Institute) standards (standard 10) using Dyckerhoff class-G tropical cement.
It contained 17.76 l/t (0.2 gallon/sack of cement = gal/sk) of a traditional additive: the sodium salt of the product of condensation of naphtaleno-sulfonic acid and formaldehyde (PNS) and furthermore, was prepared using an oil-in-water emulsion of the type described in the Invention. In this example and those following, emulsion is understood to refer to the result of the mixture of the mix water used to prepare the cement slurry, oil and a surface-active agent. This has an isoparaffin oil base: ISOPAR L., marketed by EXXON CHEMICAL, and contains one of the following three surface-active agents: S1, S2 or S3.
- S1 is a polyoxyethylenated nonylphenolsulfate (30 OE)
- S2 is a polyoxyethylenated nonylphenol(10 OE)
- S3 is an ethoxylated C-13 fatty alcohol (6 OE)

As 25° C (77° F) ISOPAR L oil has viscosity of 1.34 cP (or mPa.s). Fluid-loss and rheological-parameter measurements were taken at 25° C (77° F) according to API standard 10.

Results of these measurements are given in Table 1:

Tests performed at 25°C (77°F) with various surface-active agents and a cement slurry with a density of 1.89 g/cm³ (15.8 ppg) using class-G cement, de-ionized water and 17.76 l/t (0.2 gal/sk) of a solution of the sodium salt of the product of condensation of naphthalene-sulfonic acid and formaldehyde (PNS).

## Table 1

| Oil: ISOPAR L (% by weight of emulsion) | Surface-active agent (% by weight of oil) | Fluid loss (ml/30 mn) at 25°C (77°F) | Plastic Viscosity (PV) (cp) (mPa.s) | Yield Value (YV) (lbf/100 ft²) (Pa) | | 10' gel (lbf/100 ft²) | |
|---|---|---|---|---|---|---|---|
| 30 | S1 | 12 | 150 | 2.8 (Pa) | 5.8 | 18 (Pa) | 37 |
| 30 | S2 | 16 | 119 | 3.0 | 6.3 | 13 | 27 |
| 30 | S3 | 9 | 105 | 1.7 | 3.6 | 11 | 23 |

Remarkable results were obtained with the three surface-active agents (S1, S2 and S3).

## Example 2

Table 2 demonstrates the effect of the quantity of oil.

The cement slurry used was the same as in the previous example, with surface-active agent S1 and various oil-in-water emulsions, ISOPAR L oil was used in different percentages in the emulsions (10, 20, 30 %). The second column indicates the ratio of total slurry water to cement (by weight). The last column indicates the thickening time for two of the three cement slurries tested.

The considerable difference between their values can be explained by the difference in the quantity of water used in the two slurries.

Tests performed at 25°C (77°F) with various oil-in-water emulsions and cement slurry with a density of 1.89 g/cm³ (15.8 ppg) using class-G cement, de-ionized water and 17.76 l/t (0.2 gal/sk) of a solution of the sodium salt of the product of condensation of naphthaleno-sulfonic acid and formaldehyde (PNS), containing different quantities of ISOPAR L oil, to which 5 % (by weight) surface acting agent S1 (ethoxylated nonylphenolsulfate) was added.

Table 2

| Oil (% by weight of emulsion) | Water/cement ratio | Fluid loss (ml/30 mn) at 25°C (77°F) | Plastic Viscosity (PV) (cP) (mPa.s) | Yield value (YV) (Pa) | (lbf/100 ft²) | 10' gel (Pa) | (lbf/100 ft²) | Thickening time (hr:min) |
|---|---|---|---|---|---|---|---|---|
| 30 | 0.27 | 12 | 150 | 2.8 | 5.8 | 18 | 37 | 4:40 |
| 20 | 0.33 | 22 | 74 | 0.4 | 0.9 | 5 | 10 | 6:25 |
| 10 | 0.39 | 34 | 57 | - 0.2 | - 0.5 | 1 | 3 | - |

The results show that the fluid-loss control is very good, even with low quantities of oil (10 %).

Example 3

Similarly, Table 3 shows that very good results can be obtained with the surface-active agent S2 and with water-rich emulsions.

5

Table 3

Tests performed at 25°C (77°F) with various oil-in-water emulsions and cement slurry with a density of 1.89 g/cm³ (15.8 ppg) using class-G cement, de-ionized water and 17.76 l/t (0.2 gal/sk) of a solution of the sodium salt of the product of condensation of naphthaleno-sulfonic acid and formaldehyde (PNS).

| Oil: ISOPAR L (% by weight of emulsion) | Water/cement ratio | S2* (% by weight of oil) | Fluid loss (ml/30 mn) at 25°C (77°F) | Plastic Viscosity (PV) (cP) (mPa.s) | Yield Value (YV) (Pa) | (lbf/100 ft²) | 10' gel (Pa) | (lbf/100 ft²) |
|---|---|---|---|---|---|---|---|---|
| 40 | 0.23 | 5 | 7 | 289 | 33 | 69.0 | 43 | 91 |
| 30 | 0.27 | 5 | 16 | 119 | 3 | 6.3 | 13 | 27 |
| 20 | 0.33 | 5 | 35 | 69 | 0.5 | 1.1 | 5 | 11 |
| 10 | 0.39 | 5 | 62 | 66 | 0.05 | 0.1 | 3 | 7 |
| 30 | 0.27 | 10 | 18 | 165 | 27 | 56.0 | 21 | 44 |
| 20 | 0.33 | 10 | 40 | 79 | 1.4 | 2.9 | 7 | 15 |
| 10 | 0.39 | 10 | 63 | 72 | 0.05 | 0.1 | 2 | 5 |

* S2: ethoxylated nonylphenol

## Example 4

Various oils can be used for the preparation of emulsions according to the invention. Table 4 gives the results obtained:
- with the isoparaffin oil from example 1: ISOPAR L
- with another, more viscous isoparaffin oil (7.45 cP AT 25°C (77°F): ISOPAR V made by EXXON CHEMICAL
- with an aromatic oil: ACTREL 400 made by EXXON CHEMICAL
- with standard diesel oil.

6

## Table 4

Tests performed at 25°C (77°F) with various oils with different viscosities and cement slurry with a density of 1.89 g/cm³ (15.8 ppg) using class-G cement, de-ionized water and 17.76 l/t (0.2 gal/sk) of a solution of the sodium salt of the product of condensation of naphthaleno-sulfonic acid and formaldehyde (PNS).

| OIL | | Water/cement ratio | Viscosity (cP) (mPa.s) | Surface-active agents S1* (% by weight) | Fluid loss (ml/30mn) at 25°C (77°F) | Plastic Viscosity (PV) (cP) (mPa.s) | Yield Value (YV) (Pa) lbf/100 ft² | | 10' gel (Pa) lbf/100 ft² | |
|---|---|---|---|---|---|---|---|---|---|---|
| Type | Quantity (% by weight of emulsion) | | | | | | | | | |
| DIESEL | 30 | 0.27 | – | 5 | 12 | 15.7 | 4.34 | 9 | 6.7 | 14 |
| ISOPAR L | 20 | 0.33 | 1.3 | 5 | 22 | 74 | 0.43 | 0.9 | 4.8 | 10 |
| ISOPAR V | 20 | 0.33 | 7.5 | 5 | 30 | 88 | 0.22 | 0.5 | 4.8 | 10 |
| ACTREL 400 | 20 | 0.37 | 30 | 5 | 23 | 65 | 0.17 | 0.4 | 1.9 | 4 |

* S1: ethoxylated nonylphenolsulfate

The results are equally good with all four types of tested.

## Example 5

Table 5 gives the fluid-loss values obtained at 25, 60, 85, 120 and 150°C, the rheological parameters at 25, 60 and 85°C, as well as the thickening time at 25, 85, 120 and 150°C for a cement slurry similar to that of example 2 at a low temperature and to which silica flour and a high-temperature retarder have been added.

Table 5

Tests performed at various temperatures with a 30 % (by weight) oil-in-water emulsion of ISOPAR L, containing 5 % (by weight in relation to this oil) of surface-active agent Si# and cement slurry with a density of 1.89 g/cm³ (15.8 ppg) using class-G cement, de-ionized water and 17.76 l/t (0.2 gal/sk) of a solution of the sodium salt of the product of condensation of naphthaleno-sulfonic acid and formaldehyde (PNS).

| Temperature | | Fluid loss | Plastic Viscosity (PV) | | Yield Value (YV) | | 10' gel | | Thickening time |
|---|---|---|---|---|---|---|---|---|---|
| (°C) | (°F) | (ml/30 mn) | (cP) (mPa.s) | (Pa) | (lbf/100 ft²) | (Pa) | lbf/100 ft² | | (hr:min) |
| 25 | 77 | 12 | 150 | 2.8 | 5.8 | 17.7 | 37 | | 4:40 |
| 60 | 140 | 20 | 77 | 2.7 | 5.6 | 11.0 | 23 | | — |
| 85 | 185 | 22 | 73 | 2.7 | 5.6 | 9.1 | 19 | | 3:05 |
| 85a | 185 | 60 | 85 | 4.0 | 8.4 | 5.7 | 12 | | — |
| 120a | 248 | 74 | — | — | — | — | — | | 5:10b |
| 150a | 302 | 96 | — | — | — | — | — | | >7:00 |

Si: polyoxyethylated nonylphenolsulfate
a: 35 % silica flour in relation to weight of cement and 1.2 % of a retarder which is a mixture of lignin derivatives and a hydroxycarboxyl acid were added.
b: 0.6 % of the same retarder.

## Example 6

Table 6 shows that for slurry densities 1.89 g/cm³ (15.8 ppg) and 1.56 g/cm³ (13.0 ppg), the fluid-loss values remain low at 25°C and 85°C (77°F and 185°F). It can also be noted that the fluidity of the slurry increases as the density decreases; this shows that the rheological characteristics of the slurry depend essentially on the water cement weight ratio, and are affected very little by the presence of the oil.

Tests performed with different slurry densities with oil-in-water emulsion of 30 % by weight of ISOFAR L, containing 5 % in relation to the weight of this oil) of surface-active agent 51%. The slurry is obtained using class-G cement, de-ionized water and 17.76 l/t (0.2 gal/sk) of a solution of the sodium salt of the product of condensation of naphthaleno-sulfonic acid and formaldehyde (PNS).

Table 6

| Slurry density | | Water/cement ratio | Temperature | | Fluid loss (ml/30 mn) | Plastic Viscosity (PV) (cP)(mPa.s) | Yield Value (YV) | | 10' gel | |
|---|---|---|---|---|---|---|---|---|---|---|
| (g/cm³) | (ppg) | | (°C) | (°F) | | | (Pa) | lbf/100 ft² | Pa | lbf/100 ft² |
| 1.56 | 13.0 | 0.52 | 85 | 185 | 54 | 10 | 0.4 | 0.9 | — | 2 |
| | | | 25 | 77 | 20 | 19 | 0.6 | 1.3 | — | 2 |
| 1.68 | 14.0 | 0.40 | 85 | 185 | 18 | 26 | 1.5 | 3.2 | 3 | 6 |
| | | | 25 | 77 | 12 | 37 | 0.9 | 1.8 | 2 | 4 |
| 1.80 | 15.0 | 0.31 | 85 | 185 | 20 | 49 | 3.0 | 6.3 | 3 | 7 |
| | | | 25 | 77 | 11 | 88 | 2.1 | 4.4 | 9 | 18 |
| 1.89 | 15.8 | 0.27 | 85 | 185 | 22 | 73 | 2.7 | 5.6 | 9 | 19 |
| | | | 25 | 77 | 12 | 150 | 2.8 | 5.8 | 18 | 37 |

Cements with emulsion mix fluid can be prepared for the whole range of uses, i.e. from "light" to "heavy" slurries.

Both extreme types of slurry present specific problems to oil engineers. They are, in fact, two types of slurry whose behaviour is very different from that of "normal" density slurry.

Light slurry ranges from 12 and 14 ppg (1.4 and 1.7 g/cm³); heavy slurry is around 16 ppg (1.9 g/cm³). The Invention also applies to the particular field of light, salted slurries which combine the problems posed by both light and salted slurries.

9

## Low-density slurries

Light slurries are generally used for cementing the part of the well close to the surface, that is to say, at relatively low temperatures (less than 185° F, 85° C). However, for geothermal wells, it may be necessary to use a low-density slurry with satisfactory properties at high temperatures. Table 1 shows that by mixing the cement with an oil-in-water emulsion, excellent fluid-loss control can be obtained, even when the density is as low as 12 ppg (1.43 g/cm³). The other properties of the slurry are also satisfactory (table 7).

## High-density slurries

For the cementing of very deep wells, it is often necessary to use slurries with sufficiently high density to prevent the migration of fluids from the formation to the surface or from one zone to another.

Table 8 shows that at 18 ppg (2.15 g/cm³), there is good fluid-loss control, even at high temperatures, while the rheology, thickening time and resistance to compression remain perfectly acceptable.

## Salted low-density slurry

During positioning in the annulus, the slurry may enter into contact with formations of sodium chloride; to avoid their being dissolved, experts use slurries containing a large quantity of salt. Table 9 shows that use of an oil-in-water emulsion as the mix-fluid system for slurry produces excellent results, up to 185° F (85° C).

EP 0 315 243 A1

## TABLE 7

Properties of class-G low-density slurries mixed with an Isopar L⁻ oil-in-water emulsion and surface-active agent S1⁻⁻.

### COMPOSITION

Imperial units

| Test No. | Slurry density (ppg) | WBCT + (°F) | Oil (gal/sk) | S1 (gal/sk) | Bentonine (%) | Silica sand (%) | Disper-sing agent (gal/sk) | Retarder | Accelera-tor (%) |
|---|---|---|---|---|---|---|---|---|---|
| 1 | 12.0 | 85 | 4.25 | 0.28 | 2 | - | 0.1 | - | 1 |
| 2 | 12.0 | 85 | 4.25 | 0.28 | 1 | - | 0.1 | - | 2 |
| 3 | 12.0 | 85 | 4.25 | 0.28 | 0.5 | - | 0.1 | - | 1.5 |
| 4 | 12.0 | 185 | 4.20 | 0.27 | 2 | - | 0.1 | - | - |
| 5 | 12.0 | 250 | 5.50 | 0.35 | 2 | 35 | 0.1 | 0.35* | - |
| 6 | 12.0 | 250 | 5.50 | 0.35 | 2 | 35 | 0.1 | 0.04** | - |
| 7 | 14.0 | 185 | 2.50 | 0.32 | - | - | 0.2 | - | - |
| 8 | 14.0 | 250 | 3.20 | 0.40 | - | 35 | 0.2 | 0.60* | - |

⁻ Isopar L: paraffin oil (EXXON CHEMICAL)

⁻⁻ S1 polyoxyethylated nonylphenolsulfate (30 OE)

TABLE 7 (continued)

### COMPOSITION

S.I. units

| Test No. | Slurry density (g/cm³) | WBCT (°C) | Oil (l/t) | S1 (l/t) | Bentonine (%) | Silica sand (%) | Dispersing agent (l/t) | Retarder | Accelerator (%) |
|---|---|---|---|---|---|---|---|---|---|
| 1 | 1.43 | 30 | 377 | 25 | 2 | - | 8.9 | - | 1 |
| 2 | 1.43 | 30 | 377 | 25 | 1 | - | 8.9 | - | 2 |
| 3 | 1.43 | 30 | 377 | 25 | 0.5 | - | 8.9 | - | 1.5 |
| 4 | 1.43 | 85 | 373 | 24 | 2 | - | 8.9 | - | - |
| 5 | 1.43 | 121 | 488 | 31 | 2 | 35 | 8.9 | 0.35* | - |
| 6 | 1.43 | 121 | 488 | 31 | 2 | 35 | 8.9 | 3.50** | - |
| 7 | 1.67 | 85 | 222 | 28 | - | - | 17.7 | - | - |
| 8 | 1.67 | 121 | 284 | 35 | - | 35 | 17.7 | 0.60* | - |

\* Isopar L: paraffin oil (EXXON CHEMICAL)

\*\* S1 polyoxyethylated nonylphenolsulfate (30 OE)

TABLE 7 (continued)

RESULTS

Imperial units

| Test No. | Plastic viscosity (cP) (a) | Flow threshold (lbf/100 ft²) (a) | 10' gel (lbf/100 ft²) (a) | Fluid loss API (ml/30 mn) | Thickening time (hr:min) | Resistance to compression after 24 h psi |
|---|---|---|---|---|---|---|
| 1 | 44.2 | 14.3 | 18 | 29 | 7:20 | - |
| 2 | 50.6 | 17.6 | 25 | 21 | 7:05 | - |
| 3 | 19.3 | 3.6 | 5 | 18 | | - |
| 4 | 15.7 | 6.8 | 11 | 46 | 5:50 | 435 |
| 5 | 13.0 | 3.2 | 7 | 42 | 4:30 | 371 |
| 6 | 10.2 | 2.9 | 5 | 40 | >8:30 | - |
| 7 | 24.4 | 3.2 | 6 | 18 | 6:20 | 1141 |
| 8 | 19.2 | 3.4 | 5 | 44 | 8:00 | 640 |

+ WBCT = well-bottom circulation temperature

# mixture of calcium salt of hydrocarboxylic acid and lignin amine , in %

## solution of calcium salt of hydrocarboxylic acid in gal/sk

## solution of calcium salt of hydrocarboxylic acid in l/t

(a) at 30 or 85°C (85°F or 185°F)

TABLE 7 (continued)

## RESULTS

S.I units

| Test No. | Plastic viscosity (cP) (a) | Flow threshold (Pa) (a) | 10' gel (Pa) (a) | Fluid loss API | Thickening time | Resistance to compression after 24 h(kg/cm²) |
|---|---|---|---|---|---|---|
| 1 | 44.2 | 6.8 | 8.6 | 29 | 7:20 | - |
| 2 | 50.6 | 8.4 | 11.9 | 21 | 7:05 | - |
| 3 | 19.3 | 1.7 | 2.4 | 18 | | - |
| 4 | 15.7 | 3.2 | 5.3 | 46 | 5:50 | 30 |
| 5 | 13.0 | 1.5 | 3.4 | 42 | 4:30 | 26 |
| 6 | 10.2 | 1.4 | 2.4 | 40 | >8:30 | - |
| 7 | 24.4 | 1.5 | 2.9 | 18 | 6:20 | 79 |
| 8 | 19.2 | 1.6 | 2.4 | 44 | 8:00 | 45 |

+ WBCT = well-bottom circulation temperature

* mixture of calcium salt of hydrocarboxylic acid and lignin amine, in %

** solution of calcium salt of hydrocarboxylic acid in gal/sk

*+ solution of calcium salt of hydrocarboxylic acid in l/t

(a) at 30 or 85°C (85°F or 185°F)

# TABLE 8

Properties of class-G cement slurries at densities of 15.6, 15.8 and 18 ppg (1.87, 1.89, 2.15 g/cm³) mixed with an Isopar L emulsion and surface-active agent S1.

## COMPOSITION

Imperial units

| Test No. | Slurry density (ppg) | WBCT (°F) | Oil (gal/sk) | S1 (gal/sk) | Silica sand (%) | Hematite (%) | Dispersing agent (gal/sk) ^^ | Retarder |
|---|---|---|---|---|---|---|---|---|
| 1 | 15.8 | 185 | 1.6 | 0.10 | - | - | 0.1^ | 0.05 ^ |
| 2 | 15.6 | 250 | 2.1 | 0.13 | 35 | - | - | 0.6# |
| 3 | 15.6 | 250 | 2.1 | 0.13 | 35 | - | 0.2^ | 0.05** |
| 4 | 15.6 | 250 | 2.1 | 0.13 | 35 | - | 0.2^ | 0.6 |
| 5 | 18.0 | 250 | 2.1 | 0.13 | 35 | 50 | 0.2 | 0.6# |
| 6 | 18.0 | 250 | 2.1 | 0.13 | 35 | 50 | 0.2 | 1.2# |
| 7 | 18.0 | 250 | 2.1 | 0.13 | 35 | 50 | 0.2 | 0.05** |

TABLE 8 (continued)

## COMPOSITION

S.I. units

| Test No. | Slurry density (g/cm³) | WBCT + (°C) | Oil (l/t) | S1 (l/t) | Silica sand (%) | Hematite (%) | Dispersing agent (l/t) | Retarder |
|---|---|---|---|---|---|---|---|---|
| 1 | 1.89 | 85 | 142 | 8.9 | - | - | 8.9 | 0.05^ |
| 2 | 1.87 | 121 | 186 | 11.5 | 35 | - | - | 0.6* |
| 3 | 1.87 | 121 | 186 | 11.5 | 35 | - | 17.7 | 4.4*+ |
| 4 | 1.87 | 121 | 186 | 11.5 | 35 | - | 17.7 | 0.6 |
| 5 | 2.15 | 121 | 186 | 11.5 | 35 | 50 | 17.7 | 0.6* |
| 6 | 2.15 | 121 | 186 | 11.5 | 35 | 50 | 17.7 | 1.2* |
| 7 | 2.15 | 121 | 186 | 11.5 | 35 | 50 | 17.7 | 4.4*+ |

TABLE 8 (continued)

RESULTS

Imperial units

| Test No. | Plastic visco-sity (cP) | Flow threshold (lbf/100 ft²) | 10' gel (lbf/100 ft²) | Fluid loss API (ml/30 mn) | Thickening time (hr:min) | Resistance to compression after 24 h psi |
|---|---|---|---|---|---|---|
| 1 | 81.8 | 9.3 | 27 | 36 | 6:55 | 4 649 |
| 2 | 32.8 | 3.3 | 6 | 66 | 5:02 | 2 430 |
| 3 | 76.3 | 5.1 | 23 | 40 | - | - |
| 4 | 40.9 | 3.6 | 14 | 32 | - | 2 100 |
| 5 | 94.2 | 3.0 | 17 | 66 | 4:00 | 2 715 |
| 6 | 93.6 | 3.5 | 14 | 60 | - | - |
| 7 | 106.0 | 1.8 | 18 | 44 | - | - |

+ WBCT = well-bottom circulation temperature

\# mixture of calcium salt of hydrocarboxylic acid and lignin amine, in %

\#\# solution of calcium salt of hydrocarboxylic acid in gal/sk

\#+ solution of calcium salt of hydrocarboxylic acid in l/t

(a) at 30 or 85°C (85°F or 185°F)

^^: the dispersing agent contains an additive which prevents sedimentation.

^: lignosulfonate solution, in gal/sk (l/t).

<u>TABLE 8</u> (continued)

**RESULTS**

S.I units

| Test No. | Plastic viscosity (cP) at 85°C | Flow threshold (Pa) at 85°C | 10' gel (Pa) at 85°C | Fluid loss API | Thickening time | Resistance to compression after 24 h(kg/cm²) |
|---|---|---|---|---|---|---|
| 1 | 81.8 | 4.5 | 19.9 | 36 | 6:55 | 325 |
| 2 | 32.8 | 1.6 | 2.9 | 66 | 5:02 | 170 |
| 3 | 76.3 | 2.4 | 11.0 | 40 | - | - |
| 4 | 40.9 | 1.7 | 6.7 | 32 | - | 147 |
| 5 | 94.2 | 1.4 | 8.1 | 66 | 4:00 | 190 |
| 6 | 93.6 | 1.7 | 6.7 | 60 | - | - |
| 7 | 106.0 | 0.9 | 8.6 | 44 | - | - |

+ WBCT = well-bottom circulation temperature

* mixture of calcium salt of hydrocarboxylic acid and lignin amine in %

** solution of calcium salt of hydrocarboxylic acid in gal/sk

*+ solution of calcium salt of hydrocarboxylic acid in l/t

(a) at 30 or 85°C (85°F or 185°F)

^^: the dispersing agent contains an additive which prevents sedimentation.

^: lignosulfonate solution, in gal/sk (l/t).

## TABLE 9

Properties of class-G cement slurries containing 30 % NaCl at a density of 14 ppg (1.68 g/cm³) mixed with an Isopar L emulsion and surface-active agent S1.

### COMPOSITION

Imperial units

| Test No. | WBCT* (°F) | Oil (gal/sk) | S1 (gal/sk) | Dispersing agent 1 (gal/sk) | Dispersing agent 2 (gal/sk) | Accelerator (%) |
|----------|-----------|--------------|-------------|-----------------------------|-----------------------------|-----------------|
| 1 | 85 | 2.7 | 0.17 | 0.4 | - | - |
| 2 | 85 | 2.7 | 0.17 | 0.4 | - | 1 |
| 3 | 140 | 2.7 | 0.17 | 0.4 | - | - |
| 4 | 140 | 2.7 | 0.17 | 0.4 | - | 0.5 |
| 5 | 185 | 2.7 | 0.17 | 0.4 | - | - |
| 6 | 185 | 2.7 | 0.17 | 0.4 | - | - |
| 7 | 185 | 2.7 | 0.17 | - | 0.1 | - |
| 8 | 185 | 2.7 | 0.34 | - | 0.1 | - |

POOR QUALITY

19

TABLE 9 (continued)

COMPOSITION

S.I. units

| Test No. | WBCT* (°C) | Oil (l/t) | S1 (l/t) | Dispersing agent 1 (l/t) | Dispersing agent 2 (l/t) | Accelerator (%) |
|---|---|---|---|---|---|---|
| 1 | 30 | 239 | 15 | 35 | - | - |
| 2 | 30 | 239 | 15 | 35 | - | 1 |
| 3 | 60 | 239 | 15 | 35 | - | - |
| 4 | 60 | 239 | 15 | 35 | - | 0.5 |
| 5 | 85 | 239 | 15 | 35 | - | - |
| 6 | 85 | 239 | 15 | 35 | - | - |
| 7 | 85 | 239 | 15 | 35 | 8.9 | - |
| 8 | 85 | 239 | 30 | 35 | 8.9 | - |

EP 0 315 243 A1

TABLE 9 (continued)

RESULTS

Imperial units

| Test No. | Plastic viscosity (cP) | Flow threshold (lbf/100 ft²) | 10' gel (lbf/100 ft²) | Fluid loss API (ml/30 mn) | Thickening time (hr:min) |
|---|---|---|---|---|---|
| 1 | 55.0 | 12.2 | 8 | 22 | - |
| 2 | 76.9 | 15.8 | 16 | 28 | - |
| 3 | 37.6 | 14.2 | 15 | 66 | |
| 4 | 34.1 | 7.8 | 11 | 54 | - |
| 5 | 30.7 | 30.0 | 25 | 144 | - |
| 6 | 28.2 | 9.7 | 17 | 156 | - |
| 7 | 39.3 | 33.7 | 15 | 66 | - |
| 8 | 39.5 | 20.1 | 17 | 110 | - |

21

TABLE 9 (continued)

RESULTS

S.I units

| Test No. | Plastic viscosity (cP) | Flow threshold (Pa) | 10' gel (Pa) | Fluid loss API (ml/30 mn) | Thickening time (hr:mn) |
|---|---|---|---|---|---|
| 1 | 55.0 | 5.8 | 3.8 | 22 | - |
| 2 | 76.9 | 7.5 | 7.6 | 28 | - |
| 3 | 37.6 | 6.8 | 7.2 | 66 | - |
| 4 | 34.1 | 3.7 | 5.2 | 54 | - |
| 5 | 30.7 | 14.3 | 11.9 | 144 | - |
| 6 | 28.2 | 4.6 | 8.1 | 156 | - |
| 7 | 39.3 | 16.1 | 7.2 | 66 | - |
| 8 | 39.5 | 9.6 | 8.1 | 110 | - |

**Claims**

1. Cement slurries for the cementing of oil wells or similar, with good fluid-loss control, characterized by the fact that their mix fluid is an oil-in-water emulsion stabilized by at least one surface-active agent.

2. Slurries covered by Claim 1, characterized by the fact that the emulsion has an oil/water ratio of 5 to 50 % by weight.

3. Slurries covered by Claim 1 or 2, characterized by the fact that the oil in the emulsion is chosen from the paraffin, isoparaffin or aromatic hydrocarbons: naphthalene derivatives; asphalt; gas oil; pretroleum, silicone oils and their mixtures.

4. Slurries covered by any of Claims 1 to 3, characterized by the fact that the emulsion contains 1 to 20 % (in relation to weight of oil) surface-active agent(s).

5. Slurries covered by any of Claims 1 to 4, characterized by the fact that the surface-active agents are chosen from the anionic, cationic or non-ionic emulsifiers with a hydrophilic/lipophilic balance between 8 and 20.

6. Slurries covered by Claims 5, characterized by the fact that the emulsion contains anionic or cationic surface-active agents, used alone or in combination with non-ionic surface-active agents.

7. Slurries covered by Claim 5, characterized by the fact that the emulsion contains non-ionic surface-active agents, used alone or in combination with either anionic or cationic surface-active agents.

8. Slurries covered by any of Claims 5 to 7, characterized by the fact that the anionic surface-active agents are chosen from the fatty acid salts $C_8$-$C_{14}$, $C_{10}$-$C_{15}$ alkyl sulfates, $C_8$$C_{14}$ alkylbenzene sulfonates, ethoxylated phenol sulfates and mono- or di-phosphates.

9. Slurries covered by any of Claims 5 to 8, characterized by the fact that the cationic surface-active agents are chosen from the quaternary ammonium salts, such as alkyltrimethyl ammonium, alkyldimethylbenzyl ammonium or dialkyldimethyl ammonium chlorides or bromides, with alkyl chains of 4 to 20 carbon atoms.

10. Slurries covered by any of Claims 5 to 9, characterized by the fact that the non-ionic surface-active agents are chosen from ethoxylated alkylphenols or ethoxylated fatty alcohols.

11. Slurries covered by any of Claims 1 to 10, characterized by the fact that the density of the slurry is greater than 12 ppg (greater than 1.4 g/cm³).

12. Slurries covered by any of Claims 1 to 10, characterized by the fact that the slurry density is between 12 and 14 ppg (1.4 - 1.7 g/cm³) and that the slurry contains 30 % sodium chloride.

13. Slurries covered by any of Claims 1 to 12, characterized by the fact that they contain silica sand.

14. Slurries covered by any of Claims 1 to 13, characterized by the fact that the surface-active agent is a ethoxylated nonylphenolsulfate (30 OE).

15. Slurries covered by any of the preceding Claims, characterized by the fact that they contain traditional additives such as anti-foam agents, thickening time retarders and accelerators, dispersing agents, lighteners, weight increasing agents, etc.

16. Process for cementing of annulus in drilling wells such as oil, gas, water or geothermal wells, characterized by the fact that a mixture covered by any of Claims 1 to 15 is pumped into the annulus.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 878 875 (I.R. DUNLAP et al.) * Column 1, lines 40-41,65-68; column 2, lines 15-17,27-28,47-48,55-64; column 3, lines 23-31 * | 1-8,15, 16 | C 04 B 28/02 E 21 B 33/13 C 04 B 24/36 C 04 B 24/42 |
| A | US-A-2 842 449 (W.G. BEARDEN et al.) * Column 1, lines 15,56-64 * | 1 | |
| A | FR-A-2 120 641 (KOPPERS CO.) * Page 1, line 30 - page 2, line 1; page 5, line 18 - page 6, line 14; page 7, lines 24-27 * | 1,3,5-9 | |
| A | US-A-3 547 665 (R.L. JOHNSON) * Claim 1 * | | |
| A | US-A-3 662 830 (R.C. MARTIN) * Column 2, lines 15-17 * | 13 | |

TECHNICAL FIELDS SEARCHED (Int. Cl.4)

C 04 B 28
C 04 B 24
E 21 B 33

The present search report has been drawn up for all claims

| Place of search | Date of completion of the search | Examiner |
|---|---|---|
| THE HAGUE | 12-12-1988 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)